(19) Europäisches Patentamt

European Patent Office

Office européen des brevets

(11) **EP 1 720 092 A1**

(12) **DEMANDE DE BREVET EUROPEEN**

(43) Date de publication:
**08.11.2006 Bulletin 2006/45**

(51) Int Cl.:
***G06F 3/033*** *(2006.01)*

(21) Numéro de dépôt: **05370010.0**

(22) Date de dépôt: **04.05.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(71) Demandeur: **UNIVERSITE DES SCIENCES ET TECHNOLOGIES DE LILLE**
**59655 Villeneuve-d'Ascq Cedex (FR)**

(72) Inventeurs:
• **Chaillou, Christophe**
**59800 Lille (FR)**

• **Casiez, Gery**
**59980 Honnechy (FR)**

(74) Mandataire: **Matkowska, Franck et al**
**Matkowska & Associés**
**9 rue Jacques Prévert**
**59650 Villeneuve d'Ascq (FR)**

Remarques:
Revendications modifiées conformément à la règle 86 (2) CBE.

(54) **Périphérique d'entrée hybride isotonique/ élastique**

(57) Le périphérique d'entrée absolu et sans retour d'effort comporte un effecteur (5) mobile dans une zone de travail qui est divisée en au moins deux zones adjacentes distinctes : une zone isotonique (I) et une zone élastique (E) qui forme une butée mécanique élastique au déplacement de l'effecteur.

FIG.4

EP 1 720 092 A1

## Description

### Domaine technique

La présente invention concerne le domaine des périphériques d'entrée absolus sans retour d'effort destinés à être utilisés en informatique comme dispositifs de pointage ou pour la manipulation d'objets dans un environnement virtuel.

### Art antérieur

Les périphériques informatiques d'entrée utilisés comme dispositifs de pointage ou pour la manipulation d'objets virtuels peuvent être classés en trois catégories (isotonique, isométrique ou élastique) en fonction de la mobilité de l'effecteur et du degré de résistance exercée au niveau de leur effecteur.

Dans un périphérique isotonique, l'effecteur est à mouvement libre et peut être déplacé avec une résistance nulle ou avec une résistance constante et très faible.

Dans un périphérique isométrique (encore appelé périphérique en force ou pression), l'effecteur n'est pas ou quasiment pas mobile, et on mesure physiquement la force qui est appliquée sur l'effecteur et transmise par ce dernier.

Dans un périphérique élastique, l'effecteur est mobile mais la résistance sur l'effecteur augmente avec le déplacement.

Les périphériques d'entrée isotoniques peuvent également être classés en deux familles : périphériques absolus ou périphériques relatifs.

Dans un périphérique absolu, l'effecteur est relié mécaniquement à un support fixe en étant mobile par rapport à ce support dans un espace réel physique de travail, désigné ci-après « zone de travail » de l'effecteur. Un périphérique absolu transmet une position (x), (x,y), ou (x,y,z) dans un repère d'application de sa zone de travail. Dans ce type de périphérique, la dimension de l'environnement virtuel est limitée par la taille de la zone de travail de l'effecteur.

Dans le cas des périphériques absolus (effecteur mobile par rapport à son support selon un, deux ou trois degrés de liberté), pour augmenter la taille de l'environnement virtuel, il est connu de prévoir un mécanisme de débrayage de l'effecteur, lequel mécanisme est par exemple actionnable au moyen d'un bouton. Cependant, ce débrayage mécanique de l'effecteur n'est pas intuitif pour l'utilisateur, et s'avère de ce fait très peu pratique.

Les périphériques relatifs comportent un effecteur qui, à la différence des périphériques absolus, est libre, c'est-à-dire n'est pas relié mécaniquement à un support fixe. Les périphériques relatifs sont nécessairement des périphériques à une ou deux dimensions et envoient des incréments de position (dx) ou (dx, dy). Le périphérique d'entrée informatique relatif et isotonique le plus répandu à ce jour est le périphérique communément désigné « souris ». Dans un périphérique relatif à une dimension ou à deux dimensions, l'effecteur (partie mobile) n'étant pas relié mécaniquement à un support, il peut avantageusement être débrayé facilement et intuitivement de son environnement physique réel (zone de travail), ce qui permet de parcourir dans l'espace virtuel une grande distance sans avoir à déplacer l'effecteur de manière importante dans sa zone de travail. Dans le cas d'une souris, ce débrayage est obtenu simplement en soulevant la souris. Avec un périphérique relatif à une dimension ou à deux dimensions, la taille de l'environnement virtuel n'est donc pas limitée par la dimension de la zone de travail de l'effecteur.

On distingue également les périphériques informatiques d'entrée selon qu'ils sont ou non à retour d'effort.

Les périphériques d'entrée à retour d'effort, encore désignés périphériques haptiques, mettent en oeuvre un ou plusieurs organes moteurs qui sont commandés par un signal électrique en sorte d'appliquer sur l'effecteur du périphérique d'entrée un retour de force qui est calculé selon une loi prédéfinie en fonction de la position ou du déplacement de l'effecteur. Ce retour de force permet par exemple de faire ressentir à l'utilisateur manipulant l'effecteur des contraintes (par exemple un obstacle plus ou moins dur) de l'environnement virtuel dans lequel évolue l'objet virtuel qui est contrôlé au moyen du périphérique d'entrée. Un périphérique d'entrée à retour d'effort est de type absolu car il est nécessaire de prévoir des liaisons mécaniques pour transmettre les forces à l'effecteur. Ces périphériques d'entrée à retour de force sont notamment largement utilisés dans le domaine des jeux vidéo sous la forme par exemple d'une manette à retour de force. Un dispositif haptique absolu à retour d'effort présentant trois degrés de libertés indépendants est par exemple décrit dans la demande de brevet européen EP 1 437 641.

Les organes moteurs de ces périphériques haptiques d'une part sont volumineux et encombrants et d'autre part sont onéreux, ce qui les rend aujourd'hui inadaptés pour réaliser un périphérique informatique d'entrée miniature à très faible coût. En outre, dans de nombreuses applications la mise en oeuvre d'un retour d'effort s'avère inutile.

Pour réaliser un périphérique d'entrée informatique à très faible coût et de très faible encombrement, on utilise à ce jour des périphériques sans retour d'effort qui sont de type isotonique, isométrique ou élastique.

Plus particulièrement, dans le cas de périphériques isotoniques, pour ne pas limiter la dimension de l'espace virtuel, on utilise des périphériques relatifs tel que par exemple une souris ou un périphérique miniature comportant un pavé tactile qui est intégré à un clavier, notamment à un clavier d'ordinateur portable, et qui est communément désigné « touchpad ». Des périphériques d'entrée de type « touchpad » sont décrits par exemple dans les brevets américains US 5 521 336, US 4 529 959 et US 4 455 450.

Un exemple répandu de périphérique d'entrée isométrique miniature intégré à un clavier est un « joystick » miniature du type de celui décrit dans le brevet américain US 5 541 622.

## Objectifs de l'invention

Un objectif général de l'invention est de proposer un nouveau périphérique d'entrée sans retour d'effort et de type absolu [c'est-à-dire un périphérique dont l'effecteur est relié mécaniquement à un support et est mobile par rapport à ce support].

Un objectif plus particulier de l'invention est de proposer un nouveau périphérique d'entrée absolu sans retour d'effort, qui permet, sans mise en oeuvre d'un mécanisme de débrayage de l'effecteur, d'augmenter la dimension de l'espace virtuel comparativement à un périphérique isotonique absolu qui posséderait la même géométrie pour la zone de travail de l'effecteur.

Un autre objectif plus particulier de l'invention est de proposer un nouveau périphérique d'entrée absolu, qui présente un encombrement très faible, et de préférence qui peut être intégré à un clavier ou similaire et/ou qui présente un faible coût de fabrication [ce qui exclut les solutions à retour d'effort (périphériques haptiques)].

## Résumé de l'invention

La solution de l'invention repose sur la mise en oeuvre d'un périphérique d'entrée absolu et sans retour d'effort de type hybride (isotonique/élastique), tel que défini dans la revendication 1.

Ce périphérique d'entrée absolu et sans retour d'effort est connu en ce qu'il comporte un effecteur mobile dans une zone de travail.

De manière caractéristique selon l'invention, la zone de travail est divisée en au moins deux zones adjacentes distinctes : une zone isotonique et une zone élastique qui forme une butée mécanique élastique au déplacement de l'effecteur.

On désigne par les termes « zone élastique formant une butée mécanique élastique au déplacement de l'effecteur », toute zone intrinsèquement conçue pour appliquer sur l'effecteur une force qui s'oppose au déplacement de l'effecteur (sans le bloquer), et dont l'intensité augmente avec la distance de pénétration de l'effecteur dans la zone élastique.

Selon la variante de réalisation, le périphérique d'entrée absolu de l'invention peut être un périphérique dont l'effecteur est relié mécaniquement à un support fixe en étant mobile par rapport à ce support dans une dimension (axe de travail), ou dans deux dimensions (surface de travail) ou trois dimensions (volume de travail).

Plus particulièrement, mais de manière non limitative de l'invention, une zone élastique présente les caractéristiques additionnelles et facultatives ci-après prises isolément ou le cas échéant en combinaison les unes avec les autres :

- une zone élastique (E) comporte au moins un ressort ;
- une zone élastique (E) comporte une butée élastique (par exemple enveloppe, coussin ou similaire) remplie d'un fluide (gaz, liquide) et déformable élastiquement par l'effecteur ;
- une zone élastique (E) comporte une butée élastique réalisée dans un matériau élastique et déformable élastiquement par l'effecteur.

## Brève description des figures

D'autres caractéristiques et avantages de l'invention apparaîtront plus clairement à la lecture de la description détaillée de plusieurs variantes préférées de réalisation d'un périphérique d'entrée absolu hybride de l'invention, laquelle description est donnée à titre d'exemple non limitatif et non exhaustif de l'invention, et en référence aux dessins annexés sur lesquels :

- la figure 1 est un schéma illustrant les moyens (connus de l'art antérieur) mis en oeuvre pour contrôler un environnement virtuel à l'aide d'un périphérique d'entrée absolu ;
- la figure 2 est une représentation en perspective d'une première variante de réalisation d'un périphérique hybride de l'invention, à une dimension,
- la figure 3 est une représentation filaire du périphérique de la figure 2,
- la figure 4 est une vue partielle du périphérique de la figure 2 permettant de visualiser les moyens de détection et codage de la position de l'effecteur
- la figure 5 est une représentation en perspective d'une deuxième variante de réalisation d'un périphérique hybride 2D de l'invention,
- la figure 6 est une représentation filaire du périphérique de la figure 5,
- la figure 7 est une vue en coupe transversale partielle du périphérique de la figure 5,
- la figure 8 est une représentation en perspective d'une troisième variante de réalisation d'un périphérique hybride 2D de l'invention,
- la figure 9 est une représentation filaire du périphérique de la figure 8,
- la figure 10 est une vue en coupe transversale partielle du périphérique de la figure 8,
- la figure 11 une représentation en perspective d'une quatrième variante de réalisation d'un périphérique hybride 2D de l'invention, et
- la figure 12 une représentation en perspective d'une cinquième variante de réalisation d'un périphérique hybride 3D de l'invention.

## Description détaillée

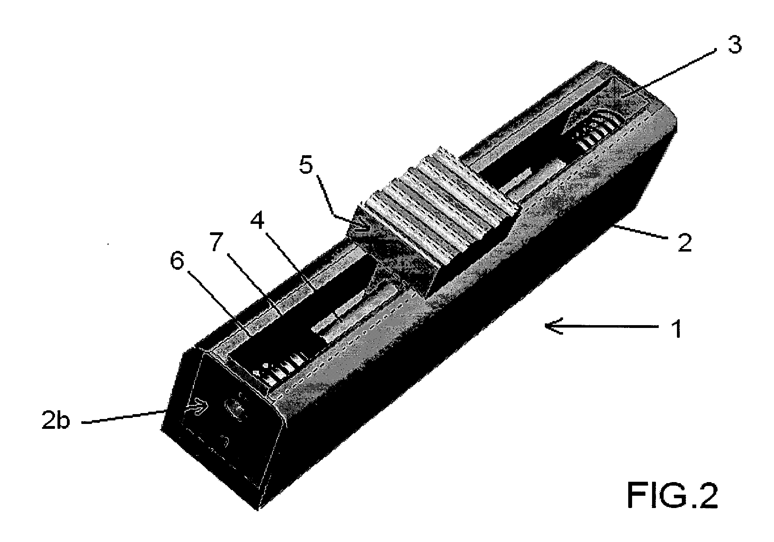

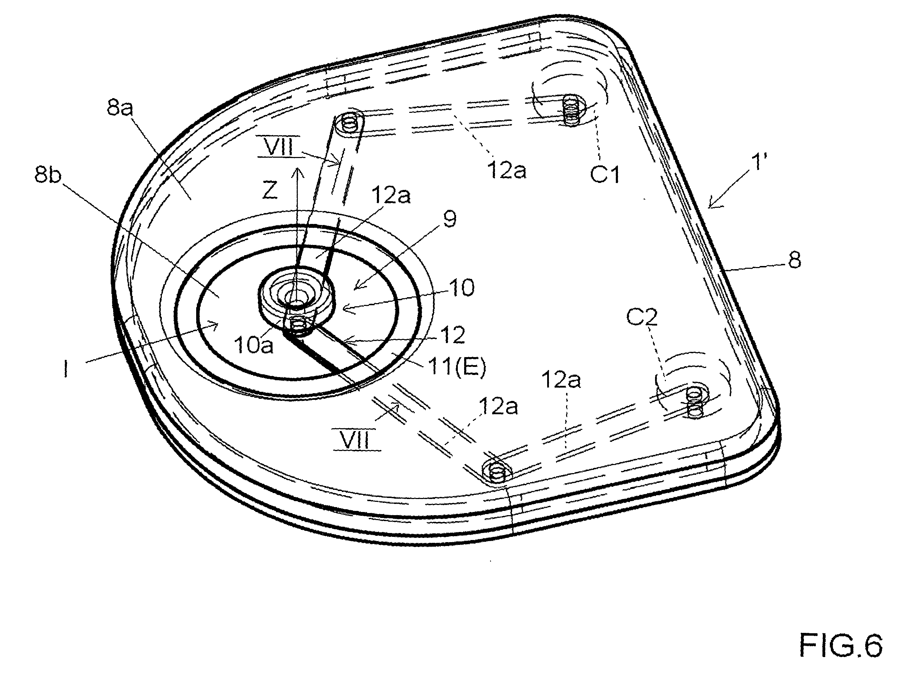

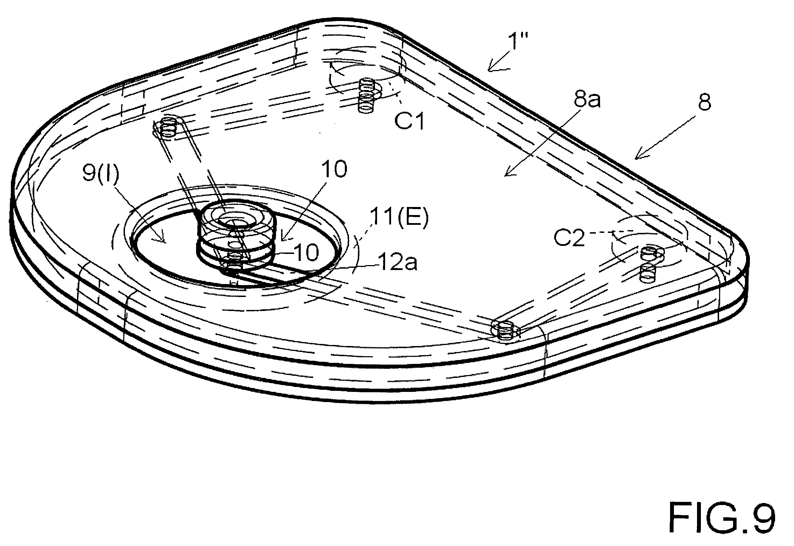

Plusieurs variantes de réalisation d'un périphérique informatique d'entrée absolu et hybride (isotonique/élastique) conformes à l'invention sont représentées sur les figures 2 à 9.

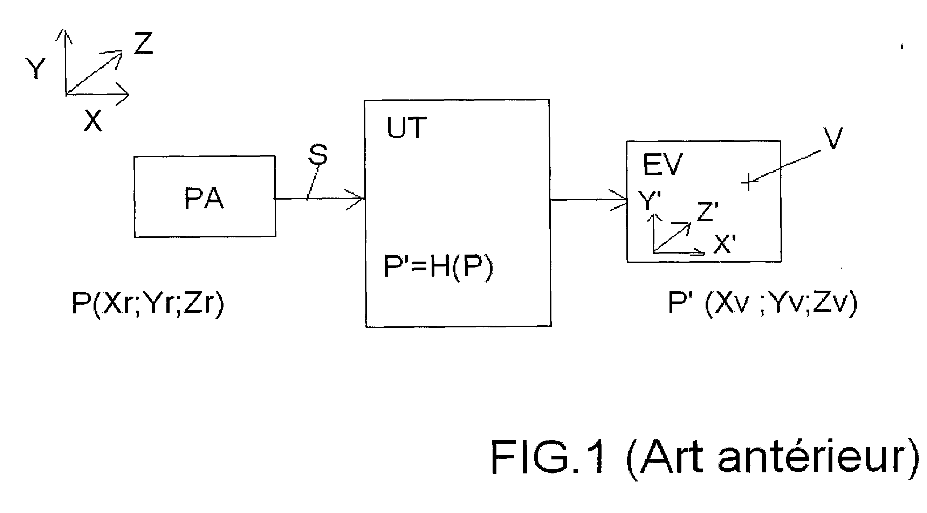

Figure 1 / Généralités sur les périphériques d'entrée absolus

Préalablement à la description détaillée de ces variantes de réalisation et en référence à la figure 1, il est brièvement rappelé que de manière connue en soi un périphérique d'entrée absolu (PA), qu'il soit de type isotonique ou élastique, est destiné à être connecté à une unité de traitement programmée (UT) (par exemple une unité centrale d'un microordinateur). Le périphérique d'entrée absolu (PA) comporte un effecteur qui est mobile dans un repère réel (X, Y, Z) et qui est lié mécaniquement à ce repère réel, et des moyens de détection de la position instantanée (p) de l'effecteur dans ce repère réel.

Les coordonnées $(x_r, y_r, z_r)$ de la position instantanée réelle de l'effecteur sont envoyées à ou lues par l'unité de traitement (UT) [figure 1/ signal S]. L'unité de traitement (UT) exécute un programme de gestion d'un environnement virtuel (EV) qui est affiché dynamiquement sur un écran. Cet environnement virtuel (EV) contient par exemple un objet virtuel (V) associé à l'effecteur du périphérique (PA).

Le programme de gestion de l'environnement virtuel (EV) fait correspondre, à la position instantanée réelle $p(x_r, y_r, z_r)$ de l'effecteur, une unique position instantanée virtuelle $p'(x_v, y_v, z_v)$ dans un repère (X',Y',Z') de l'environnement virtuel (EV), au moyen d'une fonction de transfert H prédéfinie : $p'(x_v, y_v, z_v) = H[p(x_r, y_r, z_r)]$ ; il s'agit par exemple de la position de l'objet virtuel (V).

Il convient de souligner que les repères réel (X, Y,Z) et virtuel (X',Y',Z') ne sont pas nécessairement des repères à trois dimensions (déplacement de l'effecteur dans un volume de travail), mais peuvent être des repères à deux dimensions (déplacement de l'effecteur sur une surface de travail) ou à une dimension (déplacement de l'effecteur selon un axe unique de travail). Au surplus, les repères réel (X,Y,Z) et virtuel (X',Y',Z') ne sont pas nécessairement orthonormés.

Lorsque la fonction de transfert (H) est d'ordre zéro, la relation entre les grandeurs d'entrée (p) de sortie (p') est une simple relation de proportionnalité. Le déplacement mesuré sur l'effecteur du périphérique d'entrée (PA) se traduit dans l'environnement virtuel (EV) par un déplacement dans l'environnement virtuel (EV). On parle alors de contrôle en position.

Dans le cas d'une fonction de transfert H d'ordre zéro (contrôle en position), on désigne dans la suite de la description par rapport homothétique, le vecteur h ($h_x$, $h_y$, $h_z$) reliant les deux repères réel (X,Y,Z) et virtuel (X', Y',Z') par la relation suivante :

$$\begin{bmatrix} x_v \\ y_v \\ z_v \end{bmatrix} = \begin{bmatrix} h_x \\ h_y \\ h_z \end{bmatrix} \times \begin{bmatrix} x_r \\ y_r \\ z_r \end{bmatrix}$$

La fonction de transfert (H) peut également dans certaines applications être d'ordre un. Lorsque la fonction de transfert (H) est d'ordre un, la relation entre les grandeurs d'entrée (p) de sortie (p') est de type intégrale ; dans ce cas, le déplacement mesuré sur l'effecteur du périphérique d'entrée (PA) est interprété en terme de vitesse dans l'environnement virtuel (EV). On parle alors de contrôle en vitesse.

En pratique, les périphériques isotoniques sont mieux adaptés aux fonctions de transfert d'ordre 0, et les périphériques isométriques ou élastiques sont mieux adaptés aux fonctions de transfert d'ordre 1.

Périphérique absolu hybride (isotonique/élastique) à une dimension - figures 2à4

On a représenté sur les figures 2 à 4, un périphérique informatique d'entrée absolu 1 à une dimension conforme à l'invention. Ce périphérique 1 comporte un boîtier 2 fixe dont la paroi supérieure 2a est pourvue d'une fente ou ouverture rectiligne 3 d'axe longitudinal 3a.

A l'intérieur du boîtier 2 est fixée une tige 4 de guidage fixe, parallèle à l'axe longitudinal 3a.

Sur cette tige 4 est monté coulissant un effecteur 5 possédant un unique degré de liberté en translation selon l'axe 3a. La tige 4 permet le guidage en translation de l'effecteur 5 selon l'axe longitudinal 3a.

Plus particulièrement, dans l'exemple illustré, l'effecteur 5 est réalisé sous la forme d'un curseur digital 5a, comportant ou solidaire d'une base 5b, qui est passée à travers la fente longitudinale 3, et qui est enfilée sur la tige 4, en sorte de pouvoir coulisser le long de cette tige 4.

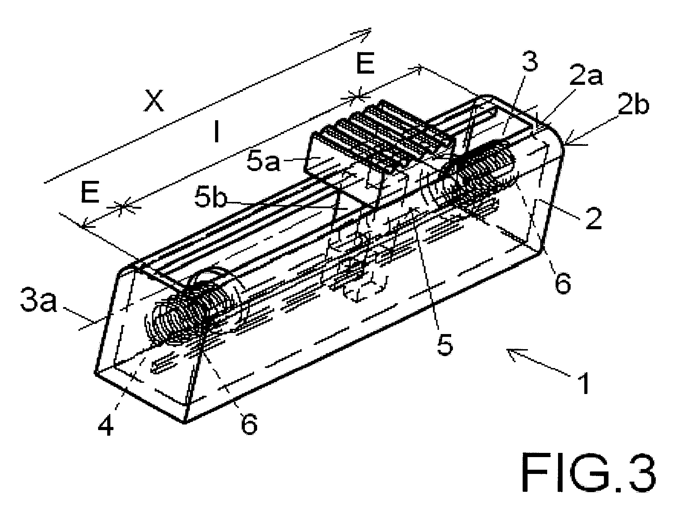

Sur chaque extrémité de la tige 4 est monté un ressort 6 associé à une rondelle 7, qui est enfilée sur la tige 4, et qui est apte à coulisser le long de cette tige 4. Le ressort 6 est positionné entre ladite rondelle 7 et la face latérale d'extrémité 2b du boîtier 2. La rondelle 7 est de préférence, mais non nécessairement fixée au ressort 6. L'extrémité du ressort 6 en contact avec la paroi latérale 2b peut éventuellement, mais non nécessairement, être fixée à ladite paroi latérale 2b. Sur les figures 2 et 3, les deux ressorts 6 sont représentés à l'état détendu.

Ce périphérique d'entrée comporte une zone de travail centrale isotonique (I) à une dimension qui est orientée selon l'axe longitudinal 3a, et qui s'étend entre les deux faces en vis à vis des deux rondelles 7 en position de repos, c'est-à-dire dans leur position de la figure 3, les deux ressorts 6 n'étant pas comprimés.

A chaque extrémité de la zone centrale isotonique (I), le périphérique d'entrée comporte une zone de travail extrême élastique (E), qui est orientée selon l'axe longitudinal 3a, et qui est adjacente à la zone isotonique centrale (I).

Dans l'exemple particulier illustré, chaque zone élastique (E) s'étend entre une rondelle 7 en position de repos et l'extrémité la plus proche de la fente longitudinale 3.

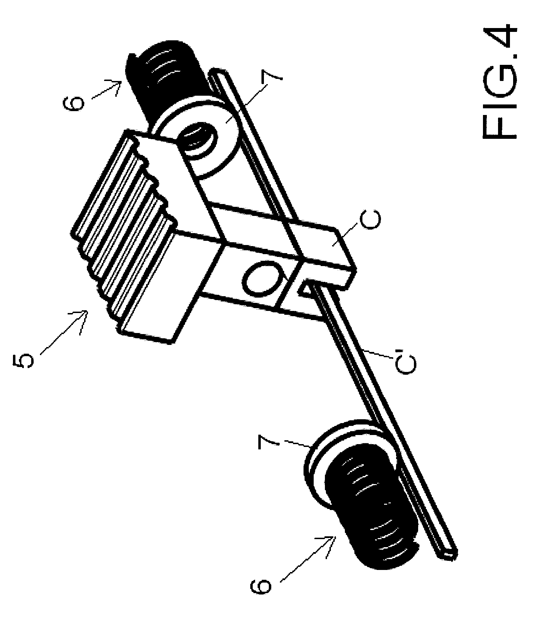

En référence à la figure 4, le périphérique 1 comporte en outre des moyens de détection (C,C') de la position instantanée ($x_r$) de l'effecteur 5 selon l'axe (X) parallèle à l'axe longitudinal 3a, lesdits moyens de détection délivrant un signal électrique permettant de coder cette position instantanée.

Dans la variante particulière de réalisation de la figure 4, ces moyens de détection sont composés de deux parties : un capteur optique mobile C prévu à la base de l'effecteur 5 ; une partie fixe sous la forme d'une bande ou réglette transparente C', qui est parallèle à l'axe de déplacement de l'effecteur 5 et qui traverse le capteur mobile C. Sur la bande ou réglette transparente C' sont dessinés des traits de repérage ou équivalent (non visibles sur la figure 4). En fonctionnement, le capteur optique mobile C détecte la présence ou l'absence de trait de repérage, et délivre un signal électrique permettant de coder la position de l'effecteur 5 sur la tige 4. Le capteur C étant un capteur relatif, il convient de prévoir une phase d'initialisation au cours de laquelle l'effecteur 5 est par exemple déplacé contre l'une des rondelles de butée élastique 7.

Dans une autre variante de réalisation, les moyens de détection et codage de la position de l'effecteur peuvent également être constitués par un potentiomètre linéaire codant la position absolue de l'effecteur 5 sur la tige 4.

En fonctionnement, lorsque l'effecteur 5 est positionné dans la zone isotonique (I), un utilisateur peut le faire coulisser librement dans cette zone (I) sans que l'effecteur 5 ne subisse de force s'opposant à son déplacement (à l'exception des faibles forces de frottement sur la tige 4 qui sont négligeables). Lorsque l'effecteur 5 atteint la limite de la zone isotonique (I), et pénètre dans l'une des deux zones élastiques (E), le ressort correspondant exerce sur l'effecteur 5, par l'intermédiaire de la rondelle 7, une force de poussée élastique selon l'axe longitudinal 3a qui s'oppose au déplacement de l'effecteur. La norme (F) de cette force est donnée par la relation : $F = k . x'_r$
Où:

- $x'_r$ représente la distance de pénétration (depuis la zone isotonique (I)) de l'effecteur 5 dans la zone élastique (E), c'est-à-dire dans l'exemple illustré la distance selon l'axe longitudinal X entre la position instantanée $X_r$ de l'effecteur 5 et la position initiale au repos de la rondelle 7, et
- k est la constante de raideur du ressort.

Lorsque l'effecteur 5 pénètre dans la zone élastique (E), le ressort 6 correspondant est comprimé. Plus l'effecteur 5 pénètre dans la zone élastique (E) en s'éloignant de la zone isotonique (I), plus le ressort 6 est comprimé et la force de force de poussée élastique inverse exercée par ce ressort 6 sur l'effecteur 5 augmente.

De préférence, la fonction de transfert ($H_E$) mise en oeuvre dans la zone élastique (E) pour le contrôle de l'environnement virtuel associé au périphérique 1 à partir de la position instantanée $x_r$ de l'effecteur 5 [voir supra - Figure 1 / Généralités sur les périphériques d'entrée absolus] est différente de la fonction de transfert ($H_I$) mise en oeuvre dans la zone isotonique (E).

Par exemple, la fonction de transfert ($H_E$) est d'ordre un (contrôle en vitesse) et la fonction de transfert ($H_I$) est d'ordre zéro (contrôle en position).

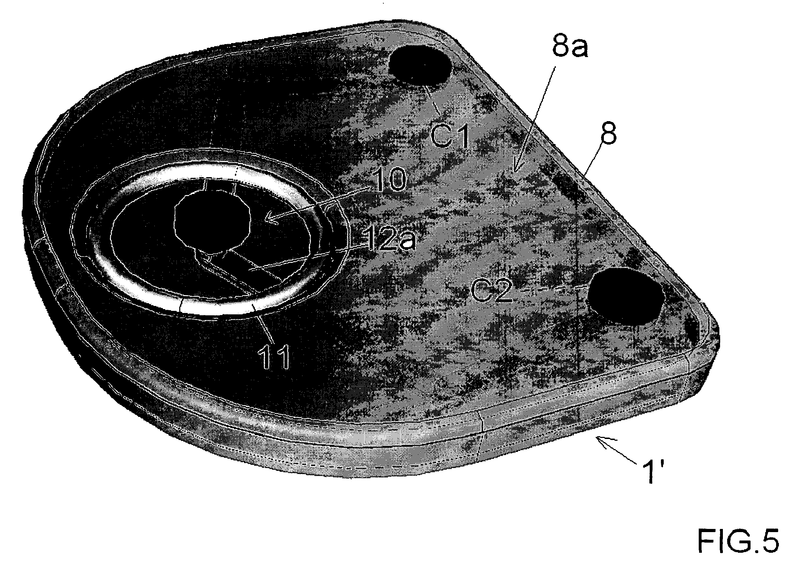

Périphérique absolu hybride (isotonique/élastique) à deux dimensions 1<sup>ère</sup> variante / figures 5 à 7

On a représenté sur les figures 5 à 7 une première variante de réalisation d'un périphérique d'entrée absolu 1' à deux dimensions, conforme à l'invention. Ce périphérique 1' comporte un boîtier 8 fixe et plat, dont la paroi supérieure 8a est pourvue d'une ouverture circulaire 9 de faible diamètre, et un effecteur 10.

Sur le bord périphérique de l'ouverture circulaire 9 est fixé un tore élastique 11 de forme annulaire. Ce tore 11 est par exemple une chambre à air constituée d'une enveloppe hermétique remplie d'air ou un anneau constitué d'un matériau, de type mousse, élastiquement déformable. La zone centrale de l'ouverture circulaire 9 délimitée par le tore élastique 11 constitue une zone de travail isotonique (I), qui dans l'exemple illustré a la forme d'un disque. Le tore 11 délimite une zone de travail périphérique élastique (E) qui dans l'exemple illustré est de forme annulaire.

L'effecteur 10 est constitué par une manette 10a de faible dimension (de préférence dimensionnée pour un actionnement digital) qui est positionnée à travers l'ouverture 9 et qui est reliée mécaniquement au boîtier 8 par un système de liaison 12.

Dans l'exemple particulier illustré, ce système de liaison 12 comporte des biellettes 12a articulées entre elles en sorte de former un pantographe. Ce pantographe 12 permet un mouvement de translation de l'effecteur 10 dans un plan de travail parallèle aux plans des biellettes 12a. Egalement, afin de garantir un déplacement de l'effecteur 10 uniquement dans un plan de travail, la base 10b de l'effecteur 10 est en contact glissant ou roulant avec la paroi de fond 8b du boîtier 8. Cette paroi de fond 8b forme pour l'effecteur, au moins dans la zone à l'aplomb de l'ouverture circulaire 9, une surface de guidage plane et parallèle au plan du pantographe 12. On évite ainsi les risques de déplacement de l'effecteur 10 vers l'intérieur du boîtier 8 selon l'axe Z perpendiculaire au plan de travail de l'effecteur, en particulier lorsque l'utilisateur manipule l'effecteur en exerçant dessus une pression.

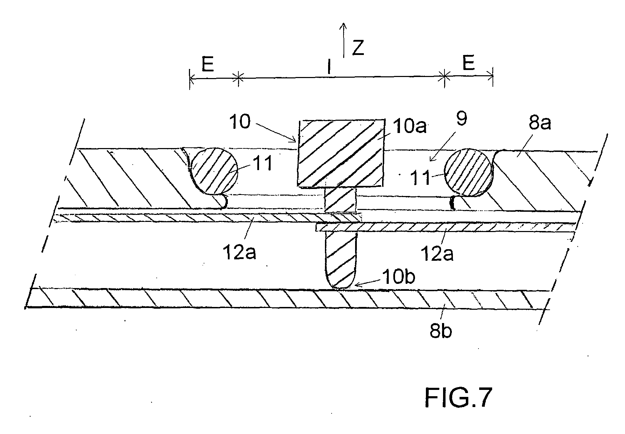

On s'assure également que les frottements entre l'effecteur 10 et la paroi de fond 8b du boîtier sont très faibles, afin d'obtenir un fonctionnement en mode isotonique dans la zone de travail centrale (I). Ceci est obtenu par un dimensionnement réduit de la région de contact entre l'effecteur 10 et la paroi de fond 8b (par exemple partie 10b de l'effecteur 10 en contact avec la paroi de fond 8b de forme arrondie telle que cela est illustré sur la figure 7 ou en forme de pointe) et/ou en prévoyant un roulement libre (bille ou similaire) entre l'effecteur 10 et la paroi de fond 8b.

La détection de la position instantanée p (xr, yr) de l'effecteur 10 dans la zone de travail à deux dimensions [dans la zone centrale isotonique (I) ou dans la zone périphérique élastique (E)] est réalisée au moyen de deux capteurs (C1) et (C2) mesurant la position instantanée en rotation de chaque biellette extrême 12a du pantographe (biellette à la jonction avec le boîtier).

En fonctionnement, lorsque l'effecteur 10 est positionné dans la zone centrale isotonique (I), un utilisateur peut le faire coulisser librement dans cette zone (I) sans que l'effecteur 10 ne subisse de forces s'opposant à son déplacement (à l'exception des faibles forces de frottement qui sont négligeables). Lorsque l'effecteur 10 atteint la limite de la zone isotonique (I), et pénètre dans la zone périphérique élastique (E), le tore élastique 11 (chambre à air ou boudin plein en matériau élastiquement déformable) correspondant à cette zone élastique (E) exerce sur l'effecteur 10, une force de poussée élastique inverse qui s'oppose au déplacement de l'effecteur 10 et qui augmente avec la distance radiale de pénétration de effecteur 10 dans la zone élastique (E). Cette force élastique est fonction de la pression de gonflage dans le cas d'une chambre à air 11 ou des propriétés mécanique intrinsèques du matériau élastique dans le cas d'un boudin plein 11 en matériau élastique.

L'air dans le la chambre 11 pourrait d'une manière plus générale être remplacé par tout fluide (gaz ou liquide) approprié permettant de former une zone élastique (E).

Les considérations et enseignement sur les fonctions de transfert $H_I$ et $H_E$ donnés précédemment pour la variante à une dimension des figures 2 à 4 sont transposables et s'appliquent également à la variante à deux dimensions qui vient d'être décrite en référence aux figures 5 à 7.

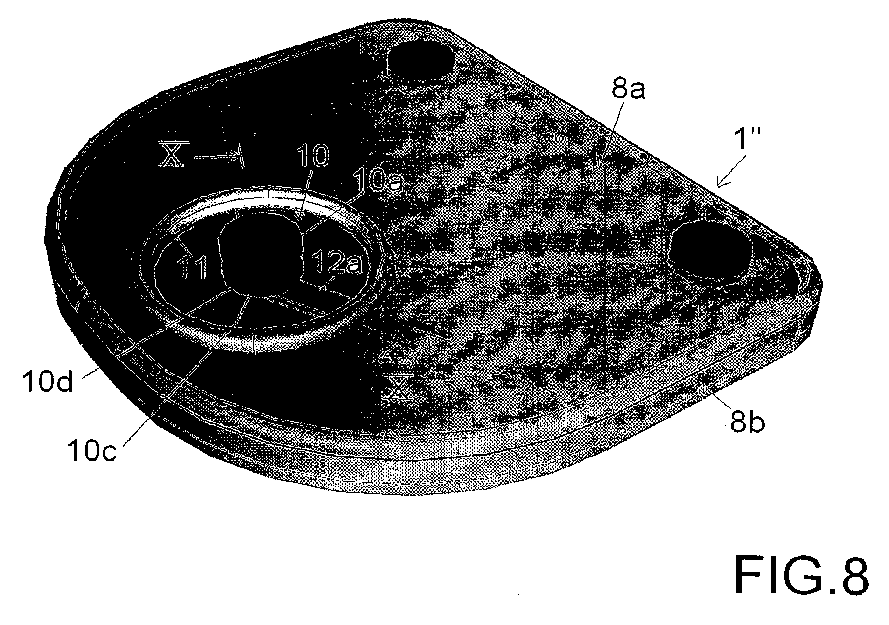

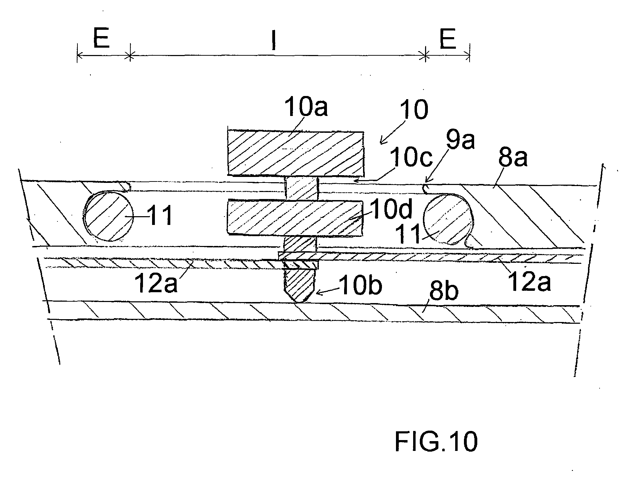

2ème variante / figures 8 à 10

Le périphérique 1" des figures 8 à 10 se différencie de la variante précitée des figures 5 à 7 en ce que le tore élastique 11 n'est pas apparent à travers l'ouverture circulaire 9, mais est fixé sous la face supérieure de la paroi 8a du boîtier 8 et vient affleurer le bord circulaire 9a de l'ouverture 9. Afin de permettre un contact entre l'effecteur 10 et le tore élastique 11, une gorge annulaire 10c ou équivalent est prévue dans l'effecteur. Cette gorge 10c est légèrement surdimensionnée par rapport à l'épaisseur de la paroi supérieure 8a du boîtier 8 en sorte de permettre le passage de partie sous-jacente 10d de l'effecteur 10 dans la zone élastique (E) délimité par le tore 11 au delà du bord circulaire 9a de l'ouverture 9.

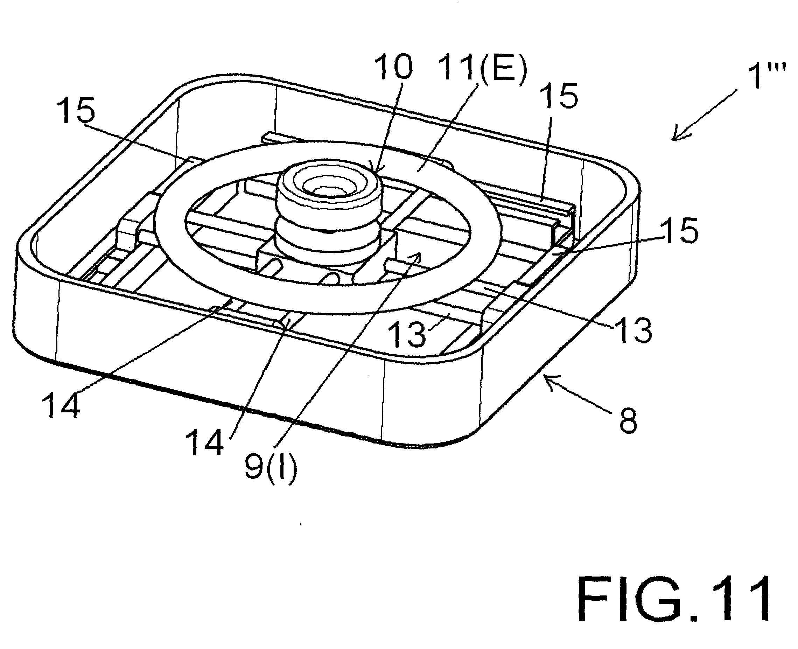

3ème variante de réalisation/ figure 11

On a représenté sur la figure 11 une troisième variante de réalisation d'un périphérique d'entrée absolu 1''' à deux dimensions, conforme à l'invention. Ce périphérique 1''' se différencie de la variante précitée des figures 8 à 10 principalement par la structure de la chaîne cinématique mise en oeuvre pour relier mécaniquement l'effecteur 10 au boîtier 8. Sur la figure 11, pour une meilleure visualisation des moyens mécaniques reliant l'effecteur 10 au boîtier 8, la paroi supérieure du boîtier 8 (sur laquelle est fixée le tore élastique 11) n'est pas représentée.

Dans cette variante, l'effecteur 10 est monté coulissant sur une paire de tiges 13 parallèles et sur une paire de tiges 14 parallèles, les tiges 13 étant orthogonales aux tiges 14, de telle sorte que l'effecteur 10 est guidé en translation dans un plan selon deux axes orthogonaux. Les tiges 13 et 14 sont guidées en translation à leurs deux extrémités dans une direction perpendiculaire à leur axe longitudinal, en étant montées coulissantes dans des rails 15 qui sont fixés dans le fond du boîtier 8. A une extrémité de chaque paire de tiges 13 ou 14 est embarqué un capteur linéaire (par exemple capteur optique) permettant de coder la position des tiges par rapport au rail fixe 15.

Dans toutes les variantes précitées de réalisation, le périphérique 1, 1', 1" ou 1''' peut avantageusement être de très faible dimension. Par exemple et de manière non limitative de l'invention pour le périphérique 1' à une dimension, la longueur cumulée des zones de travail isotonique (I) et élastiques (E) peut être inférieure à 3 cm et pour les périphériques 1', 1" et 1''' à deux dimensions, la surface cumulée des zones de travail isotonique (I) et élastique (E) peut être inférieure à 10 cm². La miniaturisation du périphérique de l'invention permet notamment de l'intégrer facilement à un autre périphérique (par exemple un clavier d'ordinateur ou une manette de jeu).

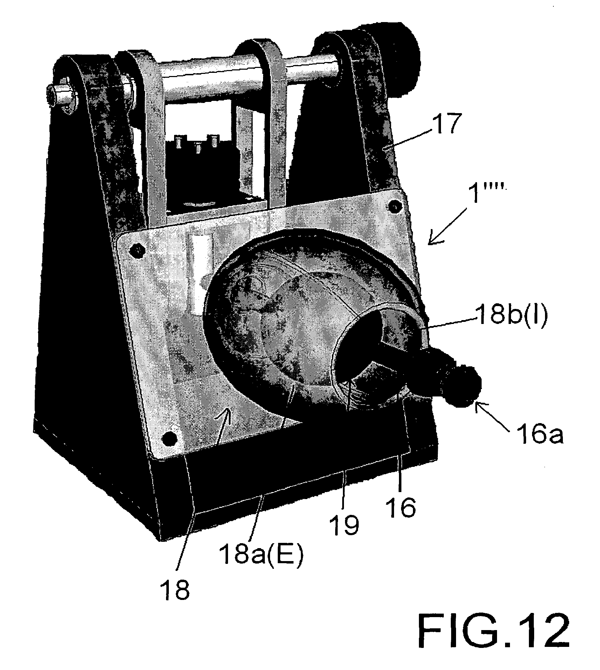

Variante de réalisation 3D / figure 12

Le périphérique 1 "" à trois dimensions de la figure 12 est réalisé à partir d'un périphérique de base 3D connu qui est décrit en détail dans l'article : « The DigiTracker, a Three Degrees of Freedom Pointing Device », F.Martinot, P.Plenacoste & C. Chaillou, Eurograhics Symposium on Virtual Environments (2004) .

En référence à la figure 12, il est simplement et brièvement rappelé que ce périphérique de base 3D connu comporte un bras 16 dont l'extrémité libre 16a est manipulable par une personne et forme un effecteur à trois degrés de liberté. Ce bras 16 est relié mécaniquement à un socle 17 et mobile par rapport à ce socle 17 avec trois degrés de liberté. Pour une compréhension plus complète de la structure et du fonctionnement de ce périphérique de base, et notamment du bras mobile 16, des moyens mécaniques de liaison associés et des moyens de détection et codage de la position dans l'espace de ce bras, l'homme du métier pourra se référer à cette publication.

Le périphérique de base 3D décrit dans la publication précitée est modifié de la manière suivante.

Sur le socle 17 est fixé un ovoïde 18 (ellipsoïde de révolution) creux, constitué d'une enveloppe 18a remplie d'un fluide (par exemple de l'air) ou réalisé en matériau élastique. Sur le bras 16 est en outre fixée une sphère 19, en matériau rigide (par exemple en plastique ou en métal). Cette sphère 19 est positionnée et mobile à l'intérieur de l'ovoïde 18. L'enveloppe 18a de l'ovoïde 18 forme une butée élastique 3D au déplacement de la sphère 19, et le volume intérieur 18b forme un volume isotonique (I) dans lequel l'extrémité libre 16a (effecteur) du bras mobile 16 peut librement être déplacée selon trois degrés de liberté.

Plus particulièrement, l'ovoïde 18 en combinaison avec la sphère 19 délimite pour l'effecteur (extrémité libre 16a du bras) un volume de travail 18b qui est isotonique et sphérique.

En fonctionnement, lors du déplacement du bras 16, la sphère 19 est déplacée à l'intérieur de l'ovoïde 18 dans le volume isotonique 18b; lorsque la sphère 19 entre en contact avec la paroi élastique 18a de l'ovoïde 18, cette paroi élastique 18a exerce sur la sphère 19 des forces de poussées élastiques, dont l'intensité augmente avec la distance de pénétration de la sphère dans la paroi 18a de l'ovoïde 18, et qui sont orientées radialement en direction du centre de la sphère 19.

## Revendications

1. Périphérique d'entrée absolu et sans retour d'effort comportant un effecteur qui est relié mécaniquement à un support et qui est mobile par rapport à ce support dans une zone de travail, **caractérisé en ce que** la zone de travail est divisée en au moins deux zones adjacentes distinctes : une zone isotonique (I) et une zone élastique (E) qui forme une butée mécanique élastique au déplacement de l'effecteur.

2. Périphérique d'entrée (1) à une dimension selon la revendication 1 **caractérisé en ce que** l'effecteur (5) est guidé en translation selon un unique axe de déplacement (X) et **en ce que** la zone de travail est divisée en trois zones : une zone centrale isotonique (I) et deux zones élastiques (E) positionnées respectivement aux deux extrémités de la zone centrale isotonique (I).

3. Périphérique d'entrée (1', 1", 1''') à deux dimensions selon la revendication 1 **caractérisé en ce que** l'effecteur (10) mobile possède deux degrés de liberté.

4. Périphérique d'entrée (1 '''') à trois dimensions selon la revendication 1 **caractérisé en ce que** l'effecteur (16a) mobile possède trois degrés de liberté.

5. Périphérique d'entrée (1', 1", 1''', 1'''') à deux dimensions ou trois dimensions selon la revendication 3 ou 4 **caractérisé en ce que** la zone de travail est divisée en deux zones : une zone centrale isotonique (I) et une zone élastique périphérique (E).

6. Périphérique à deux dimensions selon les revendications 3 et 5 **caractérisé en ce que** la zone de travail forme un disque.

7. Périphérique à trois dimensions selon les revendications 4 et 5 **caractérisé en ce que** la zone de travail est sphérique.

8. Périphérique à trois dimensions selon l'une des revendications 4, 5 ou 7 **caractérisé en ce qu'**il comprend un bras (16) dont l'extrémité libre (16a) forme l'effecteur du périphérique, et sur lequel est fixée une sphère (19) qui est mobile à l'intérieur d'un ovoïde (18) creux à paroi (18a) élastique.

9. Périphérique d'entrée selon l'une des revendications 1 à 8 **caractérisé en ce qu'**une zone élastique (E) comporte au moins un ressort (6).

10. Périphérique d'entrée selon l'une des revendications 1 à 8 **caractérisé en ce qu'**une zone élastique (E) comporte une butée élastique (11 ; 18) remplie d'un fluide.

11. Périphérique d'entrée selon l'une des revendications 1 à 8 **caractérisé en ce qu'**une zone élastique (E) comporte une butée élastique (11 ; 18) réalisée dans un matériau élastique.

## Revendications modifiées conformément à la règle 86(2) CBE.

1. Périphérique d'entrée absolu et à retour d'effort passif comportant un effecteur qui est relié mécaniquement à un support et qui est mobile par rapport à ce support dans une zone de travail, **caractérisé en ce que** la zone de travail est divisée en au moins deux zones adjacentes distinctes : une zone isotonique (I) et une zone élastique (E) qui forme une butée mécanique élastique passive au déplacement de l'effecteur.

2. Périphérique d'entrée (1) à une dimension selon la revendication 1 **caractérisé en ce que** l'effecteur (5) est guidé en translation selon un unique axe de déplacement (X) et **en ce que** la zone de travail est divisée en trois zones : une zone centrale isotonique (I) et deux zones élastiques (E) positionnées respectivement aux deux extrémités de la zone centrale isotonique (I).

**3.** Périphérique d'entrée (1', 1", 1"') à deux dimensions selon la revendication 1 **caractérisé en ce que** l'effecteur (10) mobile possède deux degrés de liberté.

**4.** Périphérique d'entrée (1"") à trois dimensions selon la revendication 1 **caractérisé en ce que** l'effecteur (16a) mobile possède trois degrés de liberté.

**5.** Périphérique d'entrée (1', 1", 1"', 1"") à deux dimensions ou trois dimensions selon la revendication 3 ou 4 **caractérisé en ce que** la zone de travail est divisée en deux zones : une zone centrale isotonique (I) et une zone élastique périphérique (E).

**6.** Périphérique à deux dimensions selon les revendications 3 et 5 **caractérisé en ce que** la zone de travail forme un disque.

**7.** Périphérique à trois dimensions selon les revendications 4 et 5 **caractérisé en ce que** la zone de travail est sphérique.

**8.** Périphérique à trois dimensions selon l'une des revendications 4, 5 ou 7 **caractérisé en ce qu'**il comprend un bras (16) dont l'extrémité libre (16a) forme l'effecteur du périphérique, et sur lequel bras est fixée une sphère (19) qui est mobile à l'intérieur d'un ovoïde (18) creux comportant une enveloppe (18a) élastique, ladite enveloppe (18a) définissant la zone élastique (E) qui forme une butée mécanique élastique passive au déplacement de la sphère (19), et l'intérieur de l'ovoïde (18) en combinaison avec la sphère (19) définissant pour l'extrémité libre (16a) du bras un volume isotonique sphérique.

**9.** Périphérique d'entrée selon l'une des revendications 1 à 8 **caractérisé en ce qu'**une zone élastique (E) comporte au moins un ressort (6).

**10.** Périphérique d'entrée selon l'une des revendications 1 à 8 **caractérisé en ce qu'**une zone élastique (E) comporte une butée élastique (11 ; 18) remplie d'un fluide.

**11.** Périphérique d'entrée selon l'une des revendications 1 à 8 **caractérisé en ce qu'**une zone élastique (E) comporte une butée élastique (11 ; 18) réalisée dans un matériau élastique.

FIG.1 (Art antérieur)

EP 1 720 092 A1

FIG.2

FIG.3

EP 1 720 092 A1

FIG.4

FIG.5

FIG.6

FIG.7

FIG.8

FIG.9

FIG.10

FIG.11

EP 1 720 092 A1

FIG.12

**Office européen des brevets**

# RAPPORT DE RECHERCHE EUROPEENNE

Numéro de la demande

EP 05 37 0010

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 2004/001577 A (KONINKLIJKE PHILIPS ELECTRONICS N.V; GRAB, RATKO) 31 décembre 2003 (2003-12-31) * page 4, ligne 21 - ligne 27; figure 1 * * page 5, ligne 1 - page 6, ligne 30; figures 2-4 * * page 7, ligne 25 - ligne 31 * | 1-3,5,6, 9,11 | G06F3/033 |
| X | DOMINJON L ET AL: "The Bubble Technique: Interacting with Large Virtual Environments Using Haptic Devices with Limited Workspace" HAPTIC INTERFACES FOR VIRTUAL ENVIRONMENT AND TELEOPERATOR SYSTEMS, 2005. WHC 2005. FIRST JOINT EUROHAPTICS CONFERENCE AND SYMPOSIUM ON PISA, ITALY 18-20 MARCH 2005, PISCATAWAY, NJ, USA,IEEE, 18 mars 2005 (2005-03-18), pages 639-640, XP010781897 ISBN: 0-7695-2310-2 * le document en entier * | 1,4,5, 7-11 | |
| | | | DOMAINES TECHNIQUES RECHERCHES (Int.Cl.7) |
| A | US 5 050 061 A (NISHIO ET AL) 17 septembre 1991 (1991-09-17) * colonne 3, ligne 48 - ligne 60; figure 4 * | 2 | G06F |
| A,D | MARTINOT F ET AL: "THE DIGITRACKER, A THREE DEGREES OF FREEDOM POINTING DEVICE" juin 2004 (2004-06), VIRTUAL ENVIRONMENTS. PROCEEDINGS OF THE EUROGRAPHICS WORKSHOP. EUROGRAPHICS, PROCEEDINGS OF EGVE, PAGE(S) 1-6 , XP008044583 * le document en entier * | 4,5,7,8 | |

-/--

Le présent rapport a été établi pour toutes les revendications

| Lieu de la recherche | Date d'achèvement de la recherche | Examinateur |
|---|---|---|
| La Haye | 6 octobre 2005 | Legrand, J-C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

**RAPPORT DE RECHERCHE EUROPEENNE**

Numéro de la demande

EP 05 37 0010

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 296 846 A (LEDLEY ET AL) 22 mars 1994 (1994-03-22) * colonne 3, ligne 7 - colonne 4, ligne 37; figures 2-5 * ----- | 4-6 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| La Haye | 6 octobre 2005 | Legrand, J-C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## EP 1 720 092 A1

**ANNEXE AU RAPPORT DE RECHERCHE EUROPEENNE
RELATIF A LA DEMANDE DE BREVET EUROPEEN NO.**

EP 05 37 0010

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-10-2005

| Document brevet cité au rapport de recherche | | Date de publication | Membre(s) de la famille de brevet(s) | | Date de publication |
|---|---|---|---|---|---|
| WO 2004001577 | A | 31-12-2003 | AU | 2003240184 A1 | 06-01-2004 |
| US 5050061 | A | 17-09-1991 | DE | 3911171 A1 | 19-10-1989 |
| | | | FR | 2631139 A1 | 10-11-1989 |
| | | | GB | 2217129 A | 18-10-1989 |
| | | | JP | 1258001 A | 16-10-1989 |
| | | | JP | 2930302 B2 | 03-08-1999 |
| | | | KR | 159497 B1 | 20-03-1999 |
| US 5296846 | A | 22-03-1994 | WO | 9207350 A1 | 30-04-1992 |

EPO FORM P0460

## RÉFÉRENCES CITÉES DANS LA DESCRIPTION

**Documents brevets cités dans la description**

- EP 1437641 A
- US 5521336 A
- US 4529959 A
- US 4455450 A
- US 5541622 A

**Littérature non-brevet citée dans la description**

- **F.MARTINOT ; P.PLENACOSTE ; C. CHAILLOU.** The DigiTracker, a Three Degrees of Freedom Pointing Device. *Eurograhics Symposium on Virtual Environments,* 2004